(19) Europäisches Patentamt
European Patent Office
Office européen des brevets

(11) **EP 1 863 161 A2**

(12) **EUROPÄISCHE PATENTANMELDUNG**

(43) Veröffentlichungstag:
**05.12.2007 Patentblatt 2007/49**

(51) Int Cl.:
*H02M 7/53* (2006.01) *H02M 1/12* (2006.01)

(21) Anmeldenummer: **07103471.4**

(22) Anmeldetag: **05.03.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **30.05.2006 DE 102006025110**

(71) Anmelder: **SIEMENS AKTIENGESELLSCHAFT**
**80333 München (DE)**

(72) Erfinder: **Eckardt, Dieter**
**91074, Herzogenaurach (DE)**

(54) **Umrichter mit einem Dämpfungsregelkreis**

(57)     Die Erfindung bezieht sich auf einen Umrichter (34) mit einer Regeleinrichtung (6) mit nachgeschaltetem Pulsweitenmodulator (8), der ausgangsseitig mit Steuereingängen eines lastseitigen Stromrichters (10) verknüpft ist, und mit einer Strommesseinrichtung (4), die eingangsseitig mit zwei Anschlüssen des lastseitigen Stromrichters (10) und ausgangsseitig mit zwei Messeingängen der Regeleinrichtung (6) verbunden ist. Erfindungsgemäß ist ein zweikanaliger Dämpfungsregelkreis (38) vorgesehen, dessen Regelkreiskanäle (56,58) eingangsseitig jeweils mit einem Ausgang der Strommesseinrichtung (4) und ausgangsseitig mit einem negierenden Addierer (54) verknüpft sind und die Ausgänge der beiden Regelkreiskanäle (56,58) und der Ausgang des negierenden Addierers (54) mit Eingängen des Pulsweitenmodulators (8) verbunden sind. Somit erhält man einen Umrichter (34), der aktiv ein angeschlossenes ungedämpftes Umrichter-Ausgangsfilter (36) dämpfen kann, ohne dass eine zusätzliche Regelungs-Totzeit auftritt.

FIG 4

EP 1 863 161 A2

**Beschreibung**

Die Erfindung bezieht sich auf einen Umrichter gemäß Oberbegriff des Anspruchs 1.

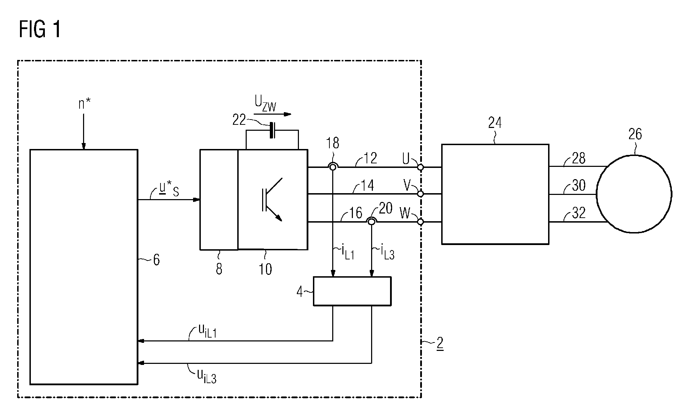

In der Figur 1 ist ein gattungsgemäßer Umrichter 2 schematisch dargestellt. In dieser Darstellung sind mit 4 eine Strommesseinrichtung, mit 6 eine Regeleinrichtung, mit 8 ein Pulsweitenmodulator und mit 10 ein lastseitiger Pulsstromrichter bezeichnet. Die wechselspannungsseitigen Ausgänge des lastseitigen Pulsstromrichters 10 sind mittels Leitungen 12, 14 und 16 jeweils mit einem Ausgang U, V und W des Umrichters 2 verknüpft. In den Leitungen 12 und 16 sind jeweils ein Stromwandler 18 und 20 angeordnet, die ausgangsseitig jeweils mit einem Eingang der Strommesseinrichtung 4, insbesondere einer integrierenden Strommesseinrichtung, verbunden sind. Mittels dieser beiden Stromwandlern 18 und 20 werden die Umrichter-Ausgangsströme $i_{L1}$ und $i_{L3}$ gemessen. Mittels der integrierenden Strommesseinrichtung 4 werden aus diesen gemessenen Umrichter-Ausgangsströmen $i_{L1}$ und $i_{L2}$ stromproportionale Signale $u_{iL1}$ und $u_{iL3}$ bestimmt, die jeweils einen Messeingang der Regeleinrichtung 6 zugeführt sind. Aufgrund dieser stromproportionalen Signale $u_{iL1}$ und $u_{iL3}$ und wenigstens eines vorgegebenen Sollwertes, beispielsweise ein Drehzahl-Sollwert n*, berechnet diese Regeleinrichtung 6, beispielsweise eine feldorientierte Regeleinrichtung, eine Stellgröße für einen zum Drehzahl-Sollwert n* korrespondierenden Ständerspannungs-Sollwert $\underline{u}_S^*$ . $\underline{u}_s^*$. Mittels des Pulsmodulators 8 wird diese Stellgröße $\underline{u}_S^*$ , der in dieser Darstellung ein Spannungs-Vektor $\underline{u}$ ist, in Steuersignale für die Stromrichterventile des lastseitigen Pulsstromrichters 10 umgesetzt. Elektrisch parallel zu gleichspannungsseitigen Anschlüssen des Pulsstromrichters 10 ist ein Zwischenkreiskondensator 22 geschaltet, an dem eine Zwischenkreis-Gleichspannung $U_{ZW}$ ansteht. Somit handelt es sich bei diesem Umrichter 2 um einen handelsüblichen Spannungszwischenkreis-Umrichter, der auch als Frequenzumrichter bezeichnet wird.

Damit die vom Umrichter 2 generierten Umrichter-Ausgangsströme $i_{L1}$, $i_{L2}$ und $i_{L3}$ möglichst oberwellenfrei sind, wird ein Umrichter-Ausgangsfilter 24 verwendet, das eingangsseitig mit den Ausgängen U, V und W des Umrichters 2 und ausgangsseitig mit einer Last 26, beispielsweise einem Elektromotor, verknüpft ist. Als Umrichter-Ausgangsfilter 24 ist ein LC-Filter, insbesondere ein symmetrisch aufgebautes LC-Filter, vorgesehen. Wird die Last 26 beispielsweise mittels ungeschirmter Motorleitungen 28, 30 und 32 an einen handelsüblichen Umrichter 2 angeschlossen, so muss ein Ausgangsfilter 24 verwendet werden. Wird ein geräuscharmer Betrieb eines derartigen Antriebs, bestehend aus Frequenzumrichter 2 und Last 26, verlangt, so ist ebenfalls ein Ausgangsfilter 24 vorteilhaft.

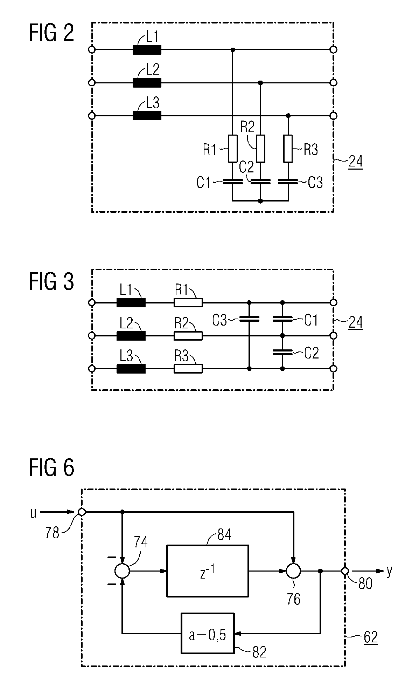

In den Figuren 2 und 3 sind jeweils eine Ausführungsform eines LC-Filters 24 schematisch dargestellt. In der Figur 2 ist das LC-Filter 24 in Sternschaltung, wogegen in der Figur 3 dieses LC-Filter 24 in Dreieckschaltung veranschaulicht sind. Bei einem symmetrisch aufgebauten LC-Filter 24 weisen alle Filterdrosseln L1, L2 und L3 und alle Filterkondensatoren C1, C2 und C3 des LC-Filters 24 jeweils gleiche Werte auf. Da durch den Betrieb des Antriebs, insbesondere beim vektorgeregelten Betrieb, eine Resonanzfrequenz des LC-Filters 24 angeregt werden kann, weisen handelsübliche Umrichter-Ausgangsfilter 24 Dämpfungswiderstände R1, R2 und R3 auf. Diese Dämpfungswiderstände R1, R2 und R3 erzeugen jedoch auch im normalen Betrieb des Antriebs Verlustleistung, die als Verlustwärme abgeführt werden muss. Mit steigender Schaltfrequenz des Umrichters 2 nimmt das Bauvolumen des Umrichter-Ausgangsfilters 24 ab, so dass dieses Filter 24 in das Umrichtergerät integriert werden kann. Dadurch wird die Verlustleistung der Dämpfungswiderstände R1, R2 und R3 des LC-Filters 24 ins Innere dieses Umrichtergerätes abgegeben, wodurch die Innentemperatur des Umrichtergerätes erhöht wird. Damit die Signalelektronik des Umrichters nicht gestört wird, müssen Maßnahmen ergriffen werden, wodurch sich die Innentemperatur des Umrichtergerätes nicht wesentlich erhöht. Durch die Integration des Umrichter-Ausgangsfilters 24 in das Umrichtergehäuse wird Platz eingespart und der Verdrahtungsaufwand gesenkt, jedoch muss der Innenraum des Umrichtergerätes entwärmt werden.

Handelsübliche Umrichter 2, insbesondere Standardumrichter, weisen eine Abtastfrequenz der Stromregelung von beispielsweise 2 - 4 kHz auf. Handelsübliche Umrichter-Ausgangsfilter 24 weisen eine Resonanzfrequenz von beispielsweise 4 kHz auf. Für eine aktive Bedämpfung eines Umrichter-Ausgangsfilters 24 mit einer Resonanzfrequenz von 4 kHz durch die Regeleinrichtung 6 des Umrichters 2 müsste diese mit einer Abtastrate von mehr als 8 kHz arbeiten, für ein wirkungsvolles Bedämpfen sind 16 kHz anzustreben, was maximal eine Verachtfachung der Abtastrate für den Stromregler handelsüblicher Umrichter 2 bedeuten würde. Außerdem würde sich eine zusätzliche Regelungs-Totzeit ergeben, die einer wirkungsvollen Dämpfung eines Umrichter-Ausgangsfilters 24 entgegenstehen würde. Darüber hinaus würde sich auch eine sehr hohe Prozessorlast ergeben, die nur dadurch verringert werden könnte, wenn ein Prozessor mit einer wesentlich höheren Taktfrequenz verwendet werden würde. Dadurch steigen jedoch die Herstellungskosten und damit der Verkaufspreis des Umrichtergerätes.

Der Erfindung liegt nun die Aufgabe zugrunde, einen Umrichter anzugeben, der aktiv ein ungedämpftes Umrichter-Ausgangsfilter dämpfen kann, ohne dass die genannten Nachteile auftreten.

Diese Aufgabe wird erfindungsgemäß mit den kennzeichnenden Merkmalen des Anspruchs 1 gelöst.

Dadurch, dass im Umrichter ein zweikanaliger Dämpfungsregelkreis vorgesehen ist, der der Regelung des Umrichters unterlagert angeordnet ist, kann dieser aktiv eingreifen, ohne die im Umrichter vorhandene Regeleinrichtung zu beeinflussen. Durch diese Anordnung des zweikanaligen Dämpfungsregelkreises ist dieser von der Regeleinrichtung des Umrichters entkoppelt. Dadurch kann als Umrichter-Ausgangsfilter ein handelsübliches ungedämpftes LC-Filter verwendet werden.

Bei einer vorteilhaften Ausführungsform des Umrichters weisen die beiden Regelkreiskanäle des Dämpfungsregelkreises jeweils eine einstellbare Reglerverstärkung auf. Dadurch kann einerseits der Dämpfungsregelkreis an ein an den Ausgängen des Umrichters angeschlossenen LC-Filter angepasst und andererseits eine gewünschte Dämpfung realisiert werden. Außerdem kann mittels der einstellbaren Reglerverstärkung des Dämpfungsregelkreises dieser auch deaktiviert werden.

Bei einer weiteren vorteilhaften Ausführungsform des Umrichters weist jeder Regelkreiskanal des Dämpfungsregelkreises einen Regler auf, der folgende Differenzengleichung:

$$y(k) = -a \cdot y(k - 1) + u(k) - u(k - 1) \qquad 0 \leq a \leq 1$$

erfüllt. Mit $a = 0,5$ kann der Regler eines jeden Regelkreiskanals des Dämpfungsregelkreises besonders einfach aufgebaut werden, so dass dieser hardwaremäßig realisiert werden kann. Außerdem wird dadurch aus einem ermittelten Stromistwert umgehend eine Spannungsamplitude bestimmt, die einer Spannungsstellgröße der Regeleinrichtung des Umrichters überlagert werden kann, so dass für den laufenden Abtastschritt eine auftretende Resonanzschwingung bedämpft werden kann.

Weitere vorteilhafte Ausführungsformen des Umrichters sind den Unteransprüchen 8 bis 14 entnehmbar.

Zur weiteren Erläuterung der Erfindung wird auf die Zeichnung Bezug genommen, in der eine Ausführungsform des erfindungsgemäßen Umrichters schematisch veranschaulich ist.

Figur 1     zeigt ein Ersatzschaltbild eines handelsüblichen Antriebs, bestehend aus einem handelsüblichen Umrichter, einem handelsüblichen gedämpften Ausgangsfilter und einer Last, in der

Figur 2     ist ein Ersatzschaltbild eines handelsüblichen gedämpften Umrichter-Ausgangsfilters in Sternschaltung, wogegen in der

Figur 3     ein Ersatzschaltbild eines derartigen Umrichter-Ausgangsfilters in Dreieckschaltung dargestellt sind, die

Figur 4     zeigt ein Ersatzschaltbild eines Antriebs mit einem erfindungsgemäßen Umrichter und einem ungedämpften Ausgangsfilter, in der

Figur 5     ist ein Ersatzschaltbild einer ersten Ausführungsform des erfindungsgemäßen Dämpfungsregelkreises dargestellt, die

Figur 6     zeigt ein Ersatzschaltbild einer Realisierung eines Reglers des Dämpfungsregelkreises nach Figur 5 und in der

Figur 7     ist ein Ersatzschaltbild einer zweiten Ausführungsform des erfindungsgemäßen Dämpfungsregelkreises dargestellt.

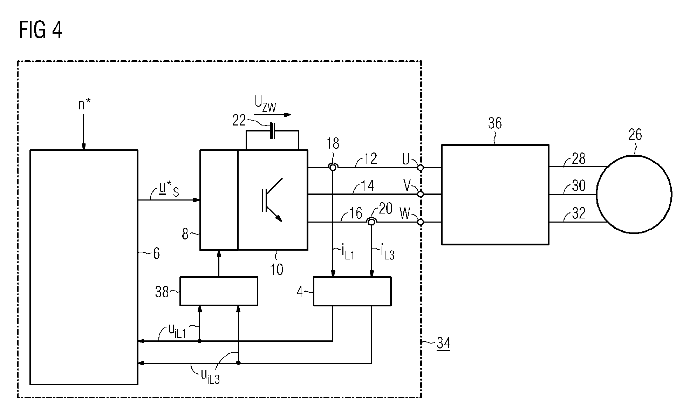

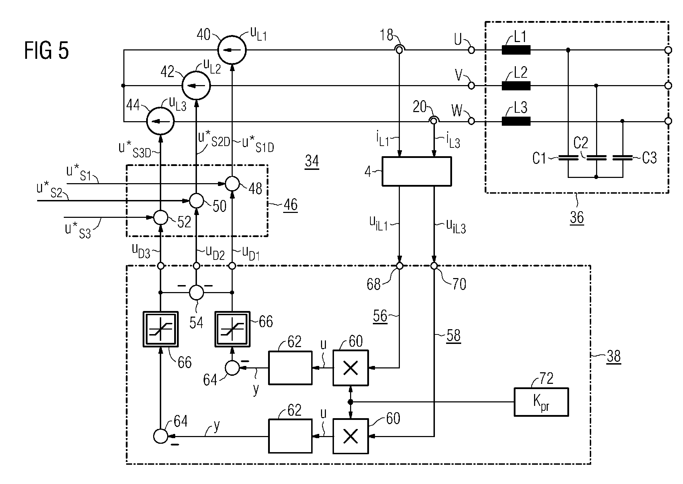

Die Figur 4 zeigt ein Ersatzschaltbild eines Antriebs, bestehend aus einem erfindungsgemäßen Umrichter 34 und einem ungedämpften Umrichter-Ausgangsfilter 36. Ein Ersatzschaltbild dieses ungedämpften Ausgangsfilters 36 ist der Figur 5 zu entnehmen. Dieser erfindungsgemäße Umrichter 34 unterscheidet sich vom handelsüblichen Umrichter 2 gemäß Figur 1 dadurch, dass dieser einen Dämpfungsregelkreis 38 aufweist. Dieser Dämpfungsregelkreis 38 ist eingangsseitig mit den beiden Ausgängen der integrierenden Strommesseinrichtung 4 und ausgangsseitig mit dem Pulsweitenmodular 8 elektrisch leitend verbunden. Da der Dämpfungsregelkreis 38 mit dem Pulsweitenmodulator 8 verknüpft ist, erfolgt der Eingriff des Dämpfungsregelkreises 38 dadurch, dass entweder eine steigende oder eine fallende Flanke eines jeweiligen Pulsweitensignals verzögert wird. Die jeweils andere Flanke dieses Pulsweitensignals bleibt unverändert. Das bedeutet, dass eine Verzögerung einer Einschaltflanke (steigende Flanke) eines Pulsweitensignals zu einer Verkleinerung der Spannungszeitfläche führt, wogegen eine Verzögerung einer Ausgangsschaltflanke (fallende Flanke) eines Pulsweitensignals zu einer Vergrößerung der Spannungszeitfläche führt. Durch eine Verkleinerung bzw. Vergrößerung der Spannungszeitfläche eines Pulsweitensignals wird eine zugehörige erzeugte Spannungsamplitude verkleinert bzw. vergrößert. Dieser Eingriff des Dämpfungsregelkreises 38 hat den Vorteil, dass das Timing im Modular 8 unkritisch ist.

In der Figur 5 ist ein Eratzschaltbild einer ersten Ausführungsform des Dämpfungsregelkreises 38 näher dargestellt. Bei dieser Darstellung ist die Regeleinrichtung 6 des Umrichters 34 und die Last 26 aus Übersichtlichkeitsgründen nicht explizit dargestellt. Außerdem ist der lastseitige Pulsstromrichter 10 mit Pulsweitenmodulator 8 durch drei Spannungsquellen 40, 42 und 44 ersetzt worden, die jeweils eine Spannung $u_{L1}$, $u_{L2}$ und $u_{L3}$ generieren. In dieser Darstellung ist der Dämpfungsregelkreis 38 ausgangsseitig nicht mit dem Pulsweitenmodulator 8 des lastseitigen Stromrichters 10, sondern mit einer Überlagerungseinrichtung 46 verknüpft, an der außerdem eine von der Regeleinrichtung 6 generierte Stellgröße $\underline{u}_S^*$ ansteht. Da in jeder Umrichter-Ausgangsphase eine Resonanzschwingung auftreten kann, muss der Dämpfungsregelkreis 38 auch für jede Umrichter-Ausgangsphase ein Korrektursignal $u_{D1}$, $u_{D2}$ und $u_{D3}$ liefern. Damit die Überlagerungseinrichtung 46 möglichst einfach ausfällt, liefert die Regeleinrichtung 6 die generierte Stellgröße $\underline{u}_S^*$ nicht als Vektor, sondern als Phasensignale $u_{S1}^*$ , $u_{S2}^*$ und $u_{S3}^*$ . Dadurch weist die Überlagerungseinrichtung 46 nur drei Addierer 48, 50 und 52 auf, an denen jeweils ein Phasensignal $u_{S1}^*$ bzw. $u_{S2}^*$ bzw. $u_{S3}^*$ und ein Korrektursignal $u_{D1}$ bzw. $u_{D2}$ bzw. $u_{D3}$ anstehen. Die korrigierten Phasensignale $u_{S1D}^*$ , $u_{S2D}^*$ und $u_{S3D}^*$ , die jeweils an einem Ausgang der drei Addierer 48, 50 und 52 anstehen, werden anschließend dem Pulsweitenmodulator 8 des lastseitigen Pulsstromrichters 10 zugeführt.

Von diesen drei Korrektursignalen $u_{D1}$, $u_{D2}$ und $u_{D3}$ werden nur zwei Korrektursignale $u_{D1}$ und $u_{D3}$ direkt vom Dämpfungsregelkreis 38 generiert. Das Korrektursignal $u_{D2}$ wird mittels eines negierenden Addierers 54 ermittelt. Das heißt, es gilt folgende Gleichung:

$$u_{D2} \;=\; -(u_{D1} \;+\; u_{D3})$$

Dadurch wird kein Nullsystem in das Umrichter-Ausgangsfilter 36 eingespeist und die Entkopplung der beiden Regelpfade (Stromregelpfad, Dämpfungsregelpfad) bleiben dadurch erhalten.

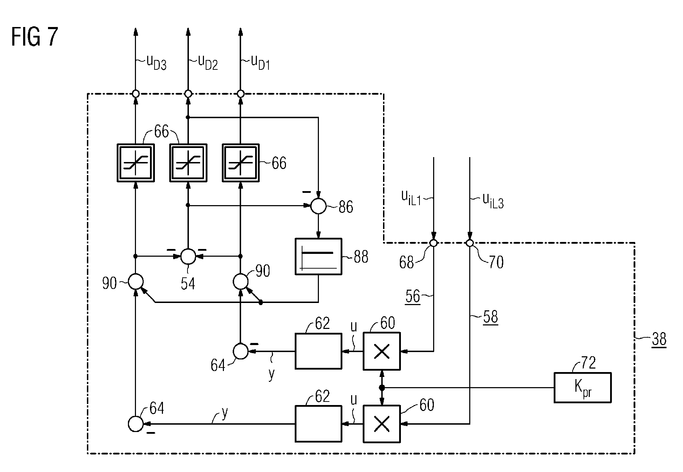

Zur Generierung der beiden Korrektursignale $u_{D1}$ und $u_{D3}$ weist der Dämpfungsregelkreis 38 zwei Regelkreiskanäle 56 und 58 auf, die identisch aufgebaut sind. Jeder Regelkreiskanal 56 und 58 ist eingangsseitig mit einem Ausgang der integrierenden Strommesseinrichtung 4 und ausgangsseitig mit einem Eingang des negierenden Addierers 54 und einem Ausgangs-Anschluss des Dämpfungsregelkreises 38 verbunden. Jeder Regelkreiskanal 56 und 58 weist einen Multiplizierer 60, einen Regler 62, einen Negierer 64 und einen Begrenzer 66 auf. Der Multiplizierer 60 ist eingangsseitig mit einem Eingang 68 bzw. 70 des Dämpfungsregelkreises 38 und mit einem einstellbaren Reglerverstärkungsfaktor 72 und ausgangsseitig mit einem Eingang des Reglers 62 verknüpft. Ausgangsseitig ist dieser Regler 62 mittels des Negierers 64 mit einem Eingang des Begrenzers 66 verbunden, der ausgangsseitig mit einem Eingang des negierenden Addierers 54 und einem Ausgang des Dämpfungsregelkreises 38 verknüpft ist. Der Aufbau des Reglers 62 ist in der Figur 6 schematisch näher dargestellt. Mit dem einstellbaren Reglerverstärkungsfaktor 72 kann der Wert für die Reglerverstärkung $K_{pr}$ zwischen Null und einer maximalen Reglerverstärkung $K_{prmax}$ wählbar eingestellt werden. Wird der einstellbare Reglerverstärkungsfaktor 72 so eingestellt, dass der Wert der Reglerverstärkung $K_{prmax}$ Null ist, sind die Regler 62 der beiden Regelkreiskanäle 56 und 58 des Dämpfungsregelkreises 38 deaktiviert. Wird dagegen mittels des Reglerverstärkungsfaktors 72 der Wert der Reglerverstärkung $K_{pr}$ auf einen maximalen Wert $K_{prmax}$ eingestellt, so befindet sich der Dämpfungsregelkreis 38 am Stabilitätsrand. Der einzustellende Wert der Reglerverstärkung $K_{pr}$ hängt vom verwendeten ungedämpften LC-Filter 36 und von einer gewünschten Dämpfung ab. In Abhängigkeit eines Wertes für die Reglerverstärkung $K_{pr}$ steht am Eingang des Reglers 62 ein Signal u an, das gleich dem Produkt aus stromproportionalem Signal $u_{iL1}$ bzw. $u_{iL3}$ und der Reglerverstärkung $K_{pr}$ ist. Aus diesem Regler-Eingangssignal u generiert dieser Regler 62 ein Regler-Ausgangssignal y, das negiert am Eingang des Begrenzers 66 ansteht. Am Ausgang dieses Begrenzers 66 steht dann ein Korrektursignal $u_{D1}$ bzw. $u_{D3}$ an. Aus diesen beiden direkt durch den Regelkreis bestimmten Korrektursignalen $u_{D1}$ und $u_{D3}$ wird das dritte Korrektursignal $u_{D2}$ derart generiert, dass kein Nullsystems in das am Umrichter 34 angeschlossene ungedämpfte LC-Filter 36 eingespeist werden kann. Dazu muss das Summensignal der drei Korrektursignale $u_{D1}$, $u_{D2}$ und $u_{D3}$ gleich Null sein. Dies wird erreicht, wenn das berechnete Korrektursignal $u_{D2}$ gleich der negativen Summe der beiden durch den Regelkreis bestimmten Korrektursignale $u_{D1}$ und $u_{D3}$ ist. Da kein Nullsystem in das am Umrichter 34 angeschlossene ungedämpfte LC-Filter 36 eingespeist wird, bleibt die Entkopplung der beiden Regelpfade, nämlich der Stromregelpfad und der Dämpfungsregelpfad, erhalten. Aus diesem Grunde muss die Berechnung des dritten Korrektursignals $u_{D2}$ auch nach den Begrenzern 66 erfolgen.

In der Figur 6 ist eine Realisierung des Reglers 62 schematisch dargestellt. Dieser Regler 62 weist eingangsseitig einen negierenden Addierer 74 und ausgangsseitig einen Addierer 76 auf. Der Eingang 78 des Reglers 62 ist einerseits mit einem Eingang des eingangsseitigen negierenden Addierers 74 und andererseits mit einem Eingang des ausgangsseitigen Addierers 76 verknüpft. Ausgangsseitig ist dieser ausgangsseitige Addierer 76 mit einem Ausgang 80 des Reglers 62 verbunden. Dieser Ausgang 80 des Reglers 62 ist mittels eines Gewichtungsfaktors 82 mit einem zweiten eingangsseitigen negierenden Addierers 74 verknüpft. Der Ausgang dieses negierenden Addierers 74 ist mittels einer Einrichtung 84 mit einem zweiten Eingang des ausgangsseitigen Addierers 76 verbunden. Diese Einrichtung 84 weist eine Übertragungsfunktion $z^{-1}$ auf. Dadurch führt diese Einrichtung 84 eine reine Verschiebung um einen Abtasttakt durch. Eine derartige Wirkung weist ein parallel arbeitendes, synchron getaktetes Register auf. Durch den Gewichtungsfaktor 82 wird das Ausgangssignal y des ausgangsseitigen Addierers 76 auf den zweiten Eingang des eingangsseitigen negierenden Addierers 74 zurückgekoppelt. Dieser Regler 62 weist folgende Übertragungsfunktion:

$$H(z) \;=\; \frac{z - 1}{z + a}$$

auf. Die Koeffizienten des Reglers 62 betragen 1 und a, wobei der Koeffizient a beliebig einen Wert zwischen Null und Eins annehmen kann. Vorzugsweise wird der Koeffizient a zu 0,5 gewählt. Dadurch wird die Ausgangsspannung y des Reglers 62 mit 0,5 multipliziert. Die Multiplikation mit a = 0,5 ist in Zweierkomplement-Arithmetik eine arithmetische Verschiebung um eine Dual-Stelle nach rechts. Die Weite dieser Verschiebung variiert nicht, so dass diese durch direkte Verdrahtung realisierbar ist. Durch diese Ausführungsform des Reglers 62 kann dieser in Hardware realisiert werden. Für diese Hardware-Realisierung können programmierbare Logikschaltungen oder digitale ASIC's verwendet werden. Durch die hardwaremäßige Realisierung des Reglers 62 und damit auch des Dämpfungsregelkreises 38 entsteht keine zusätzliche Totzeit.

Wie ein anstehendes Regler-Eingangssignal u am Eingang 78 des Reglers 62 verarbeitet wird, zeigt die folgende Differenzengleichung:

$$y(k) \;=\; -0,5 \cdot y(k - 1) + u(k) - u(k - 1)$$

mit k = Abtastschritt

$$k - 1 = \text{vorheriger Abtastschritt.}$$

Sobald zu Beginn eines neuen Abtastschrittes ein Strommesswert des vorhergehenden Abtastschrittes ansteht, liefert dieser Regler 62 unmittelbar darauf ein Regler-Ausgangssignal y, das als Korrektursignal $u_{D1}$ bzw. $u_{D2}$ bzw. $u_{D3}$ einem Phasensignal $u_{S1}^{*}$ , $u_{S2}^{*}$ bzw. $u_{S3}^{*}$ überlagert wird.

In der Figur 7 ist ein Ersatzschaltbild einer zweiten Ausführungsform des Dämpfungsregelkreises 38 näher dargestellt. Diese zweite Ausführungsform unterscheidet sich von der ersten Ausführungsform gemäß Figur 5 dadurch, dass an Stelle von zwei Begrenzern 66 drei Begrenzer 66, ein Vergleicher 86, ein Proportionalglied 88 und zwei Addierer 90 vorgesehen sind. Jeder Addierer 90 ist in einem Regelkreiskanal 56 bzw. 58 dem Negierer 64 nachgeschaltet. Ausgangsseitig sind diese beiden Addierer 90 jeweils mit einem Eingang des negierenden Addierer 54 verknüpft. Jeweils ein zweiter Eingang dieser beiden Addierer 90 ist mit einem Ausgang des Proportionalgliedes 88, das auch als P-Glied bezeichnet wird, verbunden. Jedem Ausgang der beiden Addierer 90 und des negierenden Addierers 54 ist ein Begrenzer 66 nachgeschaltet, deren Ausgänge mit den Ausgängen des Dämpferregelkreises 38 verknüpft sind. Der Ausgang des negierenden Addierers 54 ist ebenfalls mit einem nichtinvertierenden Eingang des Vergleichers 86 verbunden. Der Begrenzer 66 am Ausgang des negierenden Addierers ist ausgangsseitig mit dem invertierenden Eingang des Vergleichers 86 verknüpft. Sobald das Ausgangssignal des negierenden Addierers 54 den Wert des Ausgangssignals des Begrenzers 66 überschreitet, steht am Ausgang des Vergleichers 86 ein Signal an, das mit dem Proportionalitätsfaktor $K_{PR}$ multipliziert wird. Als Proportionalitätsfaktor $K_{PR}$ ist ein Wert von beispielsweise 0,5 vorgesehen. Dieses Ausgangssignal des P-Gliedes 88 wird mittels eines Addierers 90 dem Ausgangssignal des Negierers 64 eines jeden Regelkreiskanals 56 bzw. 58 überlagert. Durch diese Ausführungsform des Dämpfungsregelkreises 38 wird erreicht, dass die Werte der Korrektursignale $u_{D1}$, $u_{D2}$ und $u_{D3}$ maximal gleich dem Begrenzerwert des Begrenzers 66 werden können.

Durch diesen Dämpfungsregelkreis 38 im Umrichter 34, der nur die ohnehin vorhandenen Strommesssignale $i_{L1}$ und $i_{L3}$ verwendet, kann im am Umrichter 34 angeschlossenen LC-Filter 36 auf Dämpfungswiderstände R1, R2 und R3 verzichtet werden, so dass dieses LC-Filter 36 selbst im normalen Betrieb annähernd keine Verlustwärme mehr produziert. Dadurch entstehen auch keine Nachteile mehr für den Umrichter 34, wenn dieses LC-Filter 36 in das Umrichtergehäuse integriert wird. Weiterhin können LC-Filter 36 in Stern- oder Dreieckschaltung verwendet werden. Selbst bei einer Stellgrößenbegrenzung bleibt der Dämpfungsregelkreis 38 stabil. Lediglich der Grad der Dämpfung geht mit dem Ansprechen der Begrenzer 66 zurück.

**Patentansprüche**

1. Umrichter (34) mit einer Regeleinrichtung (6) mit nachgeschaltetem Pulsweitenmodulator (8), der ausgangsseitig mit Steuereingängen eines lastseitigen Stromrichters (10) verknüpft ist, und mit einer Strommesseinrichtung (4), die eingangsseitig mit zwei Anschlüssen des lastseitigen Stromrichters (10) und ausgangsseitig mit zwei Messeingängen der Regeleinrichtung (6) verbunden ist, **dadurch gekennzeichnet, dass** ein zweikanaliger Dämpfungsregelkreis (38) vorgesehen ist, deren Regelkreiskanäle (56, 58) eingangsseitig jeweils mit einem Ausgang der Strommesseinrichtung (4) und ausgangsseitig mit einem negierenden Addierer (54) verknüpft sind, und dass die Ausgänge der beiden Regelkreiskanäle (56, 58) und der Ausgang des negierenden Addierers (54) mit Eingängen des Pulsweitenmodulators (8) verbunden sind.

2. Umrichter (34) nach Anspruch 1, **dadurch gekennzeichnet, dass** die Ausgänge der beiden Regelkreiskanäle (56, 58) und der Ausgang des negierenden Addierers (54) mit Eingängen einer Überlagerungseinrichtung (46) verknüpft sind, deren zweiten Eingängen mit Stellausgängen der Regeleinrichtung (6) verbunden sind, und deren Ausgängen mit Eingängen des Pulsweitenmodulators (8) verknüpft sind.

3. Umrichter (34) nach Anspruch 1, **dadurch gekennzeichnet, dass** die beiden Regelkreiskanäle (56, 58) des Dämpfungsregelkreises (38) jeweils einen Regler (62), einen Multiplizierer (60) und einen Negierer (64) aufweisen, wobei der Multiplizierer (60) ausgangsseitig mit dem Regler (62) und dieser ausgangsseitig mit dem Negierer (64) verknüpft sind, wobei der Multiplizierer (60) mit einem Eingang (68, 70) des zweikanaligen Dämpfungsregelkreises (38) verbunden ist, und wobei jeweils ein zweiter Eingang dieser beiden Multiplizierer (60) einem einstellbaren Reglerverstärkungsfaktor (72) verknüpft sind.

4. Umrichter (34) nach Anspruch 1 oder 3, **dadurch gekennzeichnet, dass** dem Negierer (64) eines jeden Regelkreiskanals (56, 58) ein Begrenzer (66) nachgeschaltet ist, der ausgangsseitig einerseits mit einem Eingang des negierenden Addierers (54) und andererseits mit einem Ausgang des zweikanaligen Dämpfungsregelkreises (38) verknüpft ist.

5. Umrichter (34) nach Anspruch 1 oder 3, **dadurch gekennzeichnet, dass** dem Negierer (64) eines jeden Regelkreiskanals (56, 58) ein Addierer (90) nachgeschaltet ist, der ausgangsseitig einerseits mit einem Eingang des negierenden Addierers (54) und andererseits mit einem Ausgang eines Regelkreiskanals (56, 58) verknüpft ist, dass jedem Ausgang eines Regelkreiskanals (56, 58) und dem Ausgang des negierenden Addierers (54) jeweils ein Begrenzer (66) nachgeschaltet sind, dass der negierende Addier (54) ausgangsseitig mit einem nichtinvertierenden Eingang eines Vergleichers (86) verbunden ist, der ausgangsseitig mittels eines Proportionalgliedes (88) jeweils mit einem zweiten Eingang eines Addierers (90) verknüpft ist, und dass der negierende Eingang des Vergleichers (86) mit einem Ausgang des Begrenzers (66) verbunden ist, der dem negierenden Addierer (54) nachgeschaltet ist.

6. Umrichter (34) nach Anspruch 5, **dadurch gekennzeichnet, dass** der Wert des Proportionalitätsfaktors ($K_{PR}$) gleich 0,5 ist.

7. Umrichter (34) nach einem der vorgenannten Ansprüche, **dadurch gekennzeichnet, dass** jeder Regelkreiskanal (56, 58) des Dämpfungsregelkreises (38) einen Regler (62) aufweisen, die jeweils folgende Differenzengleichung:

$$y(k) = -a \cdot y(k-1) + u(k) - u(k-1) \qquad 0 \leq a \leq 1$$

erfüllt.

8. Umrichter (34) nach Anspruch 7, **dadurch gekennzeichnet, dass** der Regler (62) eines jeden Regelkreiskanals (56, 58) des Dämpfungsregelkreises (38) einen Addierer (76), einen negierenden Addierer (74), eine Einrichtung (84) und einen Gewichtungsfaktor (82) aufweist, dass ein Eingang (78) dieses Reglers (62) einerseits mit einem Eingang des negierenden Addierers (74) und andererseits mit einem Eingang des Addierers (76) verknüpft ist, dass ein Ausgang (80) dieses Reglers (62) mittels des Gewichtungsfaktors (62) mit einem zweiten Eingang des negierenden Addierers (74) verbunden ist, und dass ein Ausgang des negierenden Addierers (74) mittels der Einrichtung (84) mit einem zweiten Eingang des Addierers (76) verknüpft ist.

9. Umrichter (34) nach Anspruch 8, **dadurch gekennzeichnet, dass** als Einrichtung (84) ein parallel arbeitendes, synchron getaktetes Register vorgesehen ist.

10. Umrichter (34) nach einem der vorgenannten Ansprüche, **dadurch gekennzeichnet, dass** als Strommesseinrichtung (4) eine integrierende Strommesseinrichtung vorgesehen ist.

11. Umrichter (34) nach einem der Ansprüche 1 bis 9, **dadurch gekennzeichnet, dass** der zweikanalige Dämpferregelkreis (38) hardwaremäßig aufgebaut ist.

12. Umrichter (34) nach Anspruch 11, **dadurch gekennzeichnet, dass** für die hardwaremäßige Realisierung des zweikanaligen Dämpfungsregelkreises (38) wenigstens eine programmierbare Logikschaltung vorgesehen ist.

13. Umrichter (34) nach Anspruch 11, **dadurch gekennzeichnet, dass** für die hardwaremäßige Realisierung des zweikanaligen Dämpfungsregelkreises (38) wenigstens ein ASIC vorgesehen ist.

14. Umrichter (34) nach Anspruch 11, **dadurch gekennzeichnet, dass** für die hardwaremäßige Realisierung des zweikanaligen Dämpfungsregelkreises (38) ein Signalprozessor vorgesehen ist.

FIG 1

FIG 6

FIG 3

FIG 2

FIG 4

FIG 5

FIG 7

$u_{D3}$    $u_{D2}$    $u_{D1}$

66

66 — 66

86

$u_{iL1}$    $u_{iL3}$

68    70

56

58

38

90    90

54

88

62    u    60

64    y

72

$K_{pr}$

62    u    60

64    y